Europäisches Patentamt

European Patent Office

Office européen des brevets

(11) Numéro de publication: **0 215 690 B1**

# FASCICULE DE BREVET EUROPEEN

(45) Date de publication de fascicule du brevet:
**22.01.92**

(51) Int. Cl.5: **C09H 9/04**, A23J 3/00

(21) Numéro de dépôt: **86401668.8**

(22) Date de dépôt: **25.07.86**

(54) **Gélatine à propriétés améliorées et son procédé de préparation par pelliculage avec une gélatine hydrolysée.**

(30) Priorité: **07.08.85 FR 8512090**

(43) Date de publication de la demande:
**25.03.87 Bulletin 87/13**

(45) Mention de la délivrance du brevet:
**22.01.92 Bulletin 92/04**

(84) Etats contractants désignés:
**AT BE CH DE FR GB IT LI LU NL SE**

(56) Documents cités:
**FR-A- 799 534**
**FR-A- 808 367**
**US-A- 4 130 555**

(73) Titulaire: **SANOFI BIO INDUSTRIES**
**66, avenue Marceau**
**F-75008 Paris(FR)**

(72) Inventeur: **Poppe, Jan**
**Sparrestraat 59-B**
**B-9920 Lovendegem(BE)**
Inventeur: **Ridoux, Claude**
**Chemin du Moulin Premier**
**F-84800 Isle-Sur-Sorgue(FR)**
Inventeur: **Grouber, Bernard**
**1 rue Fernand Baudin**
**F-94470 Boissy-St. Leger(FR)**
Inventeur: **Schoentjes, Michel**
**107 Boulevard de la Reine**
**F-78000 Versailles(FR)**

(74) Mandataire: **Gillard, Marie-Louise et al**
**Cabinet Beau de Loménie 55, Rue d'Amsterdam**
**F-75008 Paris(FR)**

## Description

La présente invention concerne une gélatine dont la mouillabilité et la dispersibilité dans les liquides aqueux sont très améliorées, quelle que soit la température, et les vitesses de dissolution à chaud sensiblement augmentées, quelle que soit la concentration, par suite d'un traitement de surface consistant en un pelliculage des particules de gélatine au moyen d'une gélatine hydrolysée.

On sait que la quasi-totalité des utilisations des gélatines implique leur mise en solution préalable dans un liquide aqueux. Ceci explique l'importance que revêtent ses propriétés de mouillabilité, dispersibilité et solubilité.

Dans l'état de la technique, trois modes opératoires sont couramment utilisés :
a) gonflement des grains de gélatine dans le liquide froid, puis fusion à chaud des grains gonflés,
b) dissolution directe de la gélatine dans les liquides chauds,
c) gonflement des grains de gélatine dans un minimum d'eau froide, puis fusion de ces grains gonflés dans un liquide chaud.

Ces trois techniques présentent des problèmes de mouillabilité et de dispersibilité, aussi bien à froid qu'à chaud et cela d'autant plus que la granulométrie de la gélatine est plus fine.

De plus, et pour cette raison, la méthode de dissolution directe nécessite en général, pour les concentrations usuelles, une phase initiale de dispersion du produit par agitation très rapide, qui a pour conséquence l'inclusion importante d'air et la formation de microbulles qui sont d'autant plus longues et difficiles à évacuer que la concentration de la gélatine et donc la viscosité de la solution sont plus élevées.

Les méthodes impliquant un gonflement à froid ne présentent pas les inconvénients mentionnés dans le pragraphe précédent mais sont jugées trop longues par un nombre de plus en plus important d'utilisateurs.

C'est pourquoi, plusieurs tentatives ont été faites pour pallier ces inconvénients, comme l'atomisation de gélatines sur divers supports tels que des sucres, des maltodextrines ou des amidons.

Certaines de ces formules ont apporté quelques avantages, en particulier en ce qui concerne la vitesse de dissolution, mais n'ont jamais amélioré la dispersibilité, en raison de leur granulométrie très fine, inhérente aux poudres atomisées.

On peut citer également le brevet français 2.167.197 qui fait état d'un séchage de la gélatine sans passer par l'état gélifié dans le but de la rendre soluble à froid. Les compositions citées ne contiennent que 1 à 50 % en poids de gélatine et nécessitent l'addition de 2 à 5 fois leur poids d'ingrédients solides pour obtenir une mouillabilité et une dispersibilité satisfaisantes dans les liquides froids.

On peut également citer le brevet français 808367 qui décrit un procédé de séchage de la gélatine, consistant à former des gouttes de gélatine liquide, ou liqueur de gélatine à recouvrir chaque goutte de gélatine sèche et ensuite à sécher sous forme de coques ou sphères creuses, les gouttes individuelles gélifiées.

D'autres tentatives ont été faites par enrobage des grains de gélatine à l'aide de produits de dispersion divers, tels que la lécithine, les silicones ou des agents mouillants.

Ces produits, outre le fait qu'ils sont toujours plus coûteux que la gélatine, sont des additifs alimentaires dont l'emploi est limité.

Une originalité de la présente invention est justement que la gélatine pelliculée obtenue est constituée de 100 % en poids de gélatine.

La gélatine améliorée selon l'invention est avantageusement constituée de 90 à 99,9 % en poids d'une gélatine de base en grains ou en poudre, préparée par voie acide, alcaline ou enzymatique, issue de matières premières collagéniques d'os, de peaux ou de tendons d'animaux, ayant une force en gelée de 0 à 350 grammes (norme britannique) et une viscosité de 1 à 100 mPa.s (norme américaine), et de 0,1 à 10 % en poids d'une gélatine hydrolysée par voie acide, alcaline, thermique ou enzymatique, ou par une combinaison de ces méthodes, provenant de matières collagéniques d'os, de peaux ou de tendons d'animaux et d'une masse moléculaire moyenne en poids de 500 à 30 000, la gélatine hydrolysée étant sous forme d'une pellicule entourant les particules de la gélatine de base.

Les gélatines hydrolysées de masse moléculaire 5 000 à 10 000 sont particulièrement préférées, tandis que la gélatine de base a en général une masse moléculaire comprise entre 100 000 et 300 000.

La gélatine de base peut être une gélatine qui a subi une modification chimique ou enzymatique destinée à en transformer les propriétés physiques ou chimiques.

L'invention a également pour objet un procédé de préparation de ladite gélatine améliorée.

Ce procédé, qui est une opération de pelliculage d'une gélatine de base par une gélatine hydrolysée, est caractérisé par les opérations suivantes :
a) La mise en agitation de la gélatine de base à pelliculer :
. soit dans une turbine classique à dragéifier,

. soit dans un mélangeur granulateur sécheur ou un mélangeur granulateur,

. soit dans un appareil à lit d'air fluidisé, tel qu'un granulateur pulvérisateur sur lit d'air fluidisé,

. soit dans tout autre matériel adapté.

b) La mise en solution de la gélatine hydrolysée, à une concentration de 0,1 à 50 % en poids dans un liquide aqueux, à une température comprise entre 20 et 80°C.

c) Le mouillage de la gélatine de base en agitation par la solution de gélatine hydrolysée, par aspersion, immersion ou pulvérisation, dans l'appareil choisi pour la mise en agitation, de telle façon que la quantité de gélatine hydrolysée ajoutée soit de 0,1 à 10 % en poids sec par rapport à la masse de gélatine de base à pelliculer, exprimée en poids sec.

d) Un séchage de la gélatine pelliculée par air chaud, à une température de 30 à 80°C, soit dans l'appareil où a eu lieu l'opération de pelliculage, en particulier s'il s'agit d'une turbine à dragéifier ou d'un appareil à lit d'air fluidisé, soit dans un appareil de séchage approprié s'il s'agit d'un mélangeur ou d'un autre matériel qui ne permet pas de réaliser le séchage.

D'une façon générale, le traitement et le séchage peuvent être effectués à des températures comprises entre 20 et 80°C.

Les caractéristiques de la gélatine de base et de la gélatine hydrolysée mises en oeuvre sont celles indiquées ci-dessus à propos de la constitution de la gélatine améliorée finale. La gélatine hydrolysée employée pour le pelliculage se présente initialement sous forme de poudre, de grains ou de solution aqueuse.

Au sujet de la préparation de la gélatine hydrolysée, on pourra se référer aux documents suivants :

1. A COURTS, Biochem. J, 1955, 59 382

"Specificity of enzymes towards gelatin"

2. E.D. LEVIN, C.L. MURATOVA, M. STEPANOV, Khim. Pirodn.

Soedn. Akad. Nauk. USSR, 1961, 208

"Hydrolysis of gelatin by gelitanase".

3. O.S. TSIPEROVICH, I.F. MISHUNIN, Ukr. Biokhim. ZH, 1970, 42, 367

"Hydrolysis of gelatin by a streptomyces griseus enzyme".

4. A. GANSEL, P.S.A. Journ. Section B, p. 82 (Oct. 1952)

"Study of rate hydrolysis of gelatin".

5. Brevet DU PONT DE NEMOURS, 1971, FR 2 099 777,

"Préparation de gélatines hydrolysées avant modification chimique."

On peut aussi mentionner le brevet US- 4 130 555 au nom de la Société japonaise Nippi Incorporated et intitulé "Peptide mixtures derived from collagenous material or gelatin". Les exemples 1, 4 et 5 de ce brevet décrivent des procédés d'obtention de gélatine hydrolysée à partir de gélatine ou de matières collagéniques de peaux d'animaux, par les voies habituelles acide et thermique (exemple 1) pouvant être combinées avec la voie enzymatique (exemples 4 et 5).

La fixation des paramètres technologiques lors de l'opération de pelliculage, en particulier la charge de l'appareil, la température de la solution de gélatine hydrolysée et son débit, l'angle de pulvérisation dans les turbines et appareils à lit fluidisé, le rapport des masses entre gélatine hydrolysée et gélatine de base à pelliculer, la masse moléculaire de la gélatine hydrolysée, permettent au choix :

. soit de pelliculer individuellement les grains de la gélatine de base, sans modification significative de la courbe granulométrique, du volume apparent et de la densité apparente,

. soit au contraire de favoriser l'agglomération entre eux des grains individuellement pelliculés, ce qui a pour conséquence :

- de supprimer les particules les plus fines,

- de modifier la répartition granulométrique de la gélatine de base,

- de diminuer sensiblement la densité apparente de la gélatine de base par augmentation du volume apparent,

. soit d'obtenir tout résultat intermédiaire entre les deux précédents.

La présente invention permet d'additionner la solution de gélatine hydrolysée d'un ou plusieurs constituants dans le but de modifier sensiblement les propriétés de la gélatine de base, tels que des arômes, colorants, glucides (sucres ou polysaccharides), plastifiants, agents tensio-actifs, tous additifs alimentaires, charges minérales, principes actifs pharmaceutiques.

La gélatine à propriétés améliorées, qui est l'objet de la présente invention, peut avoir toutes les utilisations habituelles de la gélatine, qu'elle facilite grandement.

Dans les exemples qui suivent, tous les pourcentages sont en poids.

EXEMPLE 1.-

3

300 g de gélatine de peaux de porcs obtenue par traitement acide, de granulométrie tamis 30 ASTM (normes américaines- dimension des ouvertures : 590 microns) et ayant pour caractéristiques :

Force en gelée          200g (méthode Bloom-norme britannique réf.BS 757:1975)

Viscosité          3,55 mPa.s (norme américaine du Gelatin Manufacturers Institute of America)

pH          5,1

Humidité          10,4%

Point isoélectrique          8,9

| Granulométrie | | |
|---|---|---|
| T.20(840) | 0,3 % |
| T.30(590) | 0,25 % |
| T.40(420) | 39,9 % |
| T.50(297) | 28,35 % |
| T.60(250) | 5,5 % |
| T.70(210) | 11,1 % |
| T.80(177) | 2,4 % |
| T.100(149) | 1,35 % |
| Passe T.100(149) | 9,85 % |

sont introduits dans la cuve d'un granulateur pulvérisateur sur lit d'air fluidisé (type Uni Glatt fabriqué par la firme GLATT, Binzen, DE) préchauffé à la température de travail durant 10 mn. T. signifie tamis selon la norme ASTM E-11-70 et la valeur entre parenthèses représente en microns la dimension des ouvertures du tamis.

La gélatine est mise en fluidisation régulière sur le lit d'air fluidisé jusqu'à stabilisation de la température de la masse en fluidisation.

- caractéristiques du lit d'air fluidisé :
         débit d'air : maximal
         température de l'air : 50° C.

La solution d'hydrolysat de gélatine servant d'agent pelliculant est préparée en dissolvant 15 g d'hydrolysat dans 100 ml d'eau distillée. La solution est stabilisée à 40° C.

L'hydrolysat de gélatine est un hydrolysat de peaux de bovidés obtenu par traitement alcalin, de masse moléculaire 7000, de viscosité 4,5 mPa.s en solution à 20% mesurée à 25° C.

Lorsque la masse de gélatine en fluidisation est stabilisée en température, on commence la phase de traitement en pulvérisant la solution d'hydrolysat à 15% sous forme d'un brouillard de gouttes fines.
Paramètres de la phase de traitement :
Débit d'hydrolysat (apporté par une pompe péristaltique): 10 ml/mn.
Température de l'hydrolysat : 40° C maintenue par thermostatation du récipient et du circuit.
Volume d'hydrolysat : 15 ml
Rapport masse d'hydrolysat sur masse de gélatine en grains à traiter : 0,75 %
Pression d'air de pulvérisation : 4 bars
Durée du traitement : 1 minute 30 secondes.

Le traitement par l'hydrolysat est suivi d'une phase de séchage de 5 minutes en maintenant la température de séchage à 50° C.

Le produit traité obtenu est comparé au témoin constitué de la gélatine de départ non traitée.

Les comparaisons sont établies selon les tests suivants :

Force en gelée          Méthode de Bloom selon la norme britannique (British Standard) réf. BS 757 : 1975.

Viscosité          Mesure normalisée du Gelatin Manufacturers Institute of America.

Granulométrie          Tamisage sur tamis vibrants selon la norme de l'American Society for Testing Materiels. (ASTM).

Volume apparent : Volume de 100 g de produit mesuré dans une éprouvette standard en verre de 250 ml. La densité apparente s'obtient en divisant le poids par le volume.

Coulabilité : Temps d'écoulement de 25 g de produit à partir d'un entonnoir en polyéthylène sans agitation. Diamètre du tube d'écoulement 75mm. Angle de talus 30°. Diamètre du tube d'écoulement 0,8 mm. Longueur du tube 60 mm.

Temps de dispersion : Temps de dispersion de 10 g de produit versé en pluie à travers le même entonnoir dans 100 ml d'eau. Cet essai est effectué à 20°C et à 70°C.

Temps de dissolution : Temps nécessaire pour dissoudre 33,33 g de produit versé en masse dans 100 ml d'eau distillée à 90°C sous agitation magnétique sans formation de vortex.

Le tableau ci-dessous regroupe les résultats des tests :

## TABLEAU I

|  | Témoin | Traité |
|---|---|---|
| Force en gelée | 204 g | 206 g |
| Viscosité | 3,55 mPa.s | 3,52 mPa.s |
| Densité apparente | 0,65 g/ml | 0,64 g/ml |
| Volume apparent | 1,52 ml/g | 1,56 ml/g |
| Temps d'écoulement | 2 s 24/100 | 2 s 43/100 |
| Temps de dispersion |  |  |
| à 20°C | 37 s 24/100 | 3 s 26/100 |
| à 70°C | 11 s 41/100 | 2 s 43/100 |
| Temps de dissolution | 2 mn 41 s | 1 mn 24 s |
| Granulométrie T.20 | 0,3 % | 0,2 % |
| T.30 | 0,25 % | 0,2 % |
| T.40 | 39,9 % | 34,1 % |
| T.50 | 28,35 % | 30,45 % |
| T.60 | 5,5 % | 11,2 % |
| T.70 | 11,1 % | 10,6 % |
| T.80 | 2,4 % | 5,95 % |
| T.100 | 1,35 % | 3,0 % |
| Passe T.100 | 9,85 % | 4,1 % |
| Humidité | 10,4 % | 9,1 % |

Le tableau montre l'amélioration spectaculaire des propriétés de mouillabilité, dispersibilité et de vitesse de dissolution, les autres propriétés n'étant pas affectées par le traitement de surface effectué. La diminution du temps de dispersion prouve l'amélioration de la mouillabilité, la dispersibilité étant une fonction directe de la mouillabilité.

EXEMPLE 2.-

400 g de gélatine d'osséine chaulée, de point isoélectrique 4,9, force en gelée 106 g (méthode Bloom), de granulométrie tamis 30 sont traités selon le même procédé que dans l'exemple 1 par un hydrolysat de gélatine de mêmes caractéristiques dans un granulateur sur lit fluidisé de type Uni Glatt.

Paramètre de traitement :

Débit d'air de fluidisation : maximal
Température de l'air : 54° C
Volume de solution d'hydrolysat : 100 ml
Concentration de la solution d'hydrolysat : 5 %
Débit d'hydrolysat : 5 ml/mn
Température de la solution d'hydrolysat : 20° C
Pression d'air de pulvérisation : 2 bars
Rapport masse d'hydrolysat sur masse de gélatine à traiter : 1,25 %
Durée du traitement : 20 mn
Température de séchage : 54° C
Durée de séchage : 10 mn

Le produit obtenu dans ces conditions est comparé au témoin constitué de la gélatine non traitée (tableau II).

## TABLEAU II

|  | Témoin | Traitée |
|---|---|---|
| Force en gelée | 106 g | 105 g |
| Viscosité | 2,90 mPa.s | 2,91 mPa.s |
| Densité apparente | 0,68 g/ml | 0,68 g/ml |
| Volume apparent | 1,46 ml/g | 1,46 ml/g |
| Temps d'écoulement | 10 s 7/100 | 2 s 76/100 |
| Temps de dispersion à 20°C | 51 s | 6 s 3/100 |
| à 70°C | 64 s | 4 s 98/100 |
| Temps de dispersion | 3 mn 42 s | 2 mn 03 s |
| Granulométrie T.20 | 0,05 % | 0,05 % |
| T.30 | 0,05 % | 0,2 % |
| T.40 | 54 % | 51,2 % |
| T.50 | 26,8 % | 31,8 % |
| T.60 | 3,7 % | 3,9 % |
| T.70 | 7,2 % | 6 6 % |
| T.80 | 2,0 % | 2,2 % |
| T.100 | 2,7 % | 1,3 % |
| Passe T.100 | 4,8 % | 2,3 % |
| Humidité | 12,3 % | 8,9 % |

EP 0 215 690 B1

Le tableau montre l'amélioration très nette des propriétés de mouillabilité, dispersibilité et l'augmentation de vitesse de dissolution.

EXEMPLE 3.-

300 g de gélatine de peaux de porcs obtenue par traitement acide, de point isoélectrique 8,8 de force en gelée 205 g, de granulométrie tamis 60 sont traités par un hydrolysat identique à celui des exemples 1 et 2.

Le traitement s'effectue selon le procédé décrit dans l'exemple 1 dans un granulateur à lit fluidisé. Les paramètres de traitement sont réglés pour obtenir des grains pelliculés séparément par l'hydrolysat.

Paramètres de traitement

Débit d'air de fluidisation : maximal
Température de l'air : 54°C
Volume de la solution d'hydrolysat : 75 ml
Concentration de la solution : 5 %
Débit de pulvérisation : 5 ml/mn
Durée de la pulvérisation : 15 mn
Température de la solution : 20°C
Pression de pulvérisation : 2 bars
Rapport hydrolysat sur masse de gélatine à traiter : 1,25 %
Température de l'air de séchage : 54°C
Durée de séchage : 10 mn
Le produit obtenu est comparé au témoin constitué par la gélatine de départ non traitée (tableau III).

7

## TABLEAU III

| | Témoin | Traitée |
|---|---|---|
| Force en gelée | 205 g | 203 g |
| Viscosité | 3,76 mPa.s | 3,76 mPa.s |
| Densité apparente | 0,67 g/ml | 0,67 g/ml |
| Volume apparent | 1,5 ml/g | 1,5 ml/g |
| Temps d'écoulement | 2 s 29/100 | 2 s 31/100 |
| Temps de dispersion à 20°C | sup. à 30 mn, croûte en surface | ≤ 30 mn |
| à 70°C | sup. à 16 h, croûte en surface | ≤ 30 mn |
| Temps de dissolution | 8 mn | 4 mn 46 s |
| Granulométrie T. 20 | 0,0 % | 0,1 % |
| T.30 | 0,05 % | 0,1 % |
| T.40 | 0,4 % | 0,6 % |
| T.50 | 1,2 % | 3,1 % |
| T.60 | 1,3 % | 3,7 % |
| T.70 | 9,9 % | 20,0 % |
| T.80 | 26,6 % | 20,6 % |
| T.100 | 16,9 % | 20,2 % |
| Passe T.100 | 43 % | 30,6 % |
| Humidité | 10,06 % | 8,4 % |

Les résultats montrent une amélioration spectaculaire des propriétés de mouillabilité et dispersibilité accompagnée d'une disparition des phénomènes de mottage et croûtage habituels avec une telle granulométrie.

EXEMPLE 4.-

500 g de gélatine de peaux de porcs obtenue par traitement acide, identique à celle décrite dans l'exemple I,sont traités par un hydrolysat de gélatine obtenu par un traitement alcalin de peaux de bovidés (masse moléculaire 8000, viscosité à 20 % et 25°C de 5,0 mPa.s).

Les paramètres de traitement sont réglés pour obtenir à la fois un pelliculage industriel des grains et une granulation par agglomération.

L'opération est effectuée dans un granulateur sur lit d'air fluidisé par le même procédé que suivant les exemples 1 et 2.

Paramètres de traitement

Débit d'air de fluidisation : maximal

Température de l'air : 60° C

Volume de solution d'hydrolysat : 125 ml

Concentration de la solution : 5%

Débit de pulvérisation : 10 ml/mn

Durée de pulvérisation : 12 mn 30 s

Température de la solution : 20° C

Pression de pulvérisation : 2 bars

Rapport hydrolysat sur masse de gélatine à granuler : 1,75 %

Température de l'air de séchage : 60° C

Durée de séchage : 5 mn

Au cours de l'opération on constate une augmentation très nette de la granulométrie et du volume apparent.

Le produit obtenu dans ces conditions est comparé au témoin constitué de la gélatine de départ non traitée (tableau IV).

## TABLEAU IV.

|  | Témoin | Traitée |
|---|---|---|
| Force en gelée | 204 g | 205 g |
| Viscosité | 3,55 mPa.s | 3,55 mPa.s |
| Densité apparente | 0,65 g/ml | 0,41 g/ml |
| Volume apparent | 1,52 ml/g | 2,42 ml/g |
| Temps d'écoulement | 2 s 24/100 | 4 s 75/100 |
| Temps de dispersion à 20°C | 37 s 24/100 | 7 s 49/100 |
| à 70°C | 11 s 41/100 | 4 s 44/100 |
| Temps de dissolution | 2 mn 41s | 1 mn 48 s |
| Granulométrie T.20 | 0,3 % | 1,8 % |
| T.30 | 0,25 % | 13,75 % |
| T.40 | 39,9 % | 49,05 % |
| T.50 | 28,35 % | 23,95 % |
| T.60 | 5,5 % | 5,2 % |
| T.70 | 11,1 % | 2,8 % |
| T.80 | 2,4 % | 1,5 % |
| T.100 | 1,35 % | 0,8 % |
| Passe T.100 | 9,85 % | 1 % |
| Humidité | 10,4 % | 9,4 % |

Ce tableau montre comme dans les exemples 1, 2 et 3 une amélioration très nette des propriétés de mouillabilité, dispersibilité et une augmentation de la vitesse de dissolution. Il montre par ailleurs une élimination des poudres fines et poussières potentielles par un phénomène de granulation accompagnée d'une diminution de la densité apparente et d'une augmentation du volume apparent.

**Revendications**

**Revendications pour les Etats contractants suivants : BE, CH, DE, FR, GB, IT, LI, LU, NL, SE**

1. Gélatine caractérisée en ce qu'elle est constituée de particules de gélatine de base ayant une force en gelée de 0 à 350 g (norme britannique) et une viscosité de 1 à 100 mPa.s (norme américaine), recouvertes d'une pellicule de gélatine hydrolysée

2. Une gélatine suivant la revendication 1, caractérisée en ce qu'elle est constituée de 90 à 99,9 % en poids d'une gélatine de base de toute origine et de 0,1 % à 10 % en poids d'une gélatine hydrolysée de toute origine d'une masse moléculaire moyenne en poids de 500 à 30.000.

3. Une gélatine selon la revendication 2, caractérisée en ce que la gélatine hydrolysée a une masse moléculaire moyenne en poids comprise entre 5 000 et 10 000.

4. Une gélatine suivant l'une quelconque des revendications 1 à 3, caractérisée en ce que la gélatine de base est une gélatine qui a subi une modification chimique ou enzymatique destinée à transformer ses propriétés physiques ou chimiques.

5. Une gélatine suivant l'une quelconque des revendications 1 à 4, caractérisée en ce qu'elle contient au moins un additif modificateur des propriétés de la gélatine.

6. Une gélatine suivant la revendication 5, caractérisée en ce que ledit additif est choisi parmi les arômes, les colorants, les glucides, les plastifiants, les agents tensio-actifs, les additifs alimentaires, les charges minérales, les principes actifs pharmaceutiques.

7. Procédé de préparation d'une gélatine suivant l'une quelconque des revendications 1 à 6, caractérisé par la mise en agitation d'une gélatine de base à pelliculer, par la mise en solution d'une gélatine hydrolysée à une concentration de 0,1 à 50 % en poids dans un liquide aqueux, à une température comprise entre 20 et 80° C, par le mouillage de la gélatine de base en agitation par la solution de gélatine hydrolysée, par aspersion, immersion ou pulvérisation, de façon que la proportion de gélatine hydrolysée ajoutée soit de 0,1 à 10% en poids sec par rapport à la masse de gélatine de base exprimée en poids sec, et par un séchage de la gélatine pelliculée.

8. Procédé suivant la revendication 7, caractérisé en ce que l'on utilise une gélatine de base d'origine quelconque, présentant une force en gelée de 0 à 350 grammes (norme britannique) et une viscosité de 1 à 100 mPa.s (norme américaine), et en ce que l'on utilise une gélatine hydrolysée d'origine quelconque ayant une masse moléculaire moyenne en poids de 500 à 30 000.

9. Procédé suivant la revendication 8, caractérisé en ce que la gélatine hydrolysée utilisée a une masse moléculaire moyenne en poids de 5 000 à 10 000.

10. Procédé suivant l'une des revendications 7 à 9, caractérisé en ce que le traitement et le séchage sont effectués à des températures comprises entre 20 et 80° C.

11. Procédé suivant l'une des revendications 7 à 10, caractérisé en ce que la gélatine de base utilisée a subi préalablement une modification chimique ou enzymatique.

12. Procédé suivant l'une quelconque des revendications 7 à 11, caractérisé en ce que l'on ajoute à la solution de gélatine hydrolysée utilisée pour le pelliculage au moins une substance destinée à modifier les propriétés de la gélatine.

13. Procédé suivant la revendication 12, caractérisé en ce que ladite substance est choisie parmi les arômes, les colorants, les glucides, les plastifiants, les agents tensio-actifs, les additifs alimentaires, les charges minérales, les principes actifs pharmaceutiques.

14. Procédé suivant l'une quelconque des revendications 7 à 13, caractérisé en ce qu'il est mis en oeuvre dans un dispositif permettant de pelliculer, en continu ou en discontinu, par pulvérisation, aspersion ou immersion.

15. Procédé suivant la revendication 14, caractérisé en ce que le dispositif utilisé est une turbine à dragéifier, un mélangeur granulateur sécheur, ou un granulateur pulvérisateur sur lit d'air fluidisé.

16. Procédé suivant l'une quelconque des revendications 7 à 15, caractérisé en ce que l'on fixe les paramètres technologiques de l'opération de pelliculage de façon que chaque particule de la gélatine de base à pelliculer soit enrobée individuellement d'une fine pellicule de la gélatine hydrolysée sans entraîner de façon significative de modification du volume apparent, de la densité apparente et de la granulométrie de la gélatine de base.

17. Procédé suivant l'une quelconque des revendications 7 à 15, caractérisé en ce que l'on fixe les paramètres technologiques de l'opération de pelliculage de façon que, au cours de l'opération, les particules de la gélatine de base, après avoir été individuellement pelliculées, s'agglomèrent entre elles pour former des granulés de dimensions supérieures, avec pour conséquence une diminution de la densité apparente, une augmentation du volume apparent et une modification de la répartition granulométrique.

18. Procédé suivant l'une quelconque des revendications 7 à 17, caractérisé en ce que l'on utilise, comme gélatine de base, une gélatine de peau de porc obtenue par traitement acide et, comme gélatine hydrolysée, un hydrolysat de peaux de bovidés obtenu par traitement alcalin.

19. Procédé suivant l'une quelconque des revendications 7 à 17, caractérisé en ce que l'on utilise, comme gélatine de base, une gélatine d'osséine chaulée et, comme gélatine hydrolysée, un hydrolysat de peaux de bovidés obtenu par traitement alcalin.

20. Procédé suivant la revendication 18 ou 19, çaractérisé en ce qu'il est mis en oeuvre dans un granulateur pulvérisateur sur lit d'air fluidisé.

**Revendications pour l'Etat contractant suivant : AT**

1. Procédé de préparation d'une gélatine constituée de particules de gélatine de base ayant une force en gelée de 0 à 350 g (norme britannique) et une viscosité de 1 à 100 mPa.s (norme américaine), recouvertes d'une pellicule de gélatine hydrolysée, caractérisé par la mise en agitation d'une gélatine de base à pelliculer, par la mise en solution d'une gélatine hydrolysée à une concentration de 0,1 à 50 % en poids dans un liquide aqueux, à une température comprise entre 20 et 80°C, par le mouillage de la gélatine de base en agitation par la solution de gélatine hydrolysée, par aspersion, immersion ou pulvérisation, de façon que la proportion de gélatine hydrolysée ajoutée soit de 0,1 à 10 % en poids sec par rapport à la masse de gélatine de base exprimée en poids sec, et par un séchage de la gélatine pelliculée.

2. Procédé suivant la revendication 1 , caractérisé en ce que l'on utilise une gélatine de base d'origine quelconque, présentant une force en gelée de 0 à 350 grammes (norme britannique) et une viscosité de 1 à 100 mPa.s (norme américaine), et en ce que l'on utilise une gélatine hydrolysée d'origine quelconque ayant une masse moléculaire moyenne en poids de 500 à 30 000.

3. Procédé suivant la revendication 2, caractérisé en ce que la gélatine hydrolysée utilisée a une masse moléculaire moyenne en poids de 5 000 à 10 000.

4. Procédé suivant l'une des revendications 1 à 3 , caractérisé en ce que le traitement et le séchage sont effectués à des températures comprises entre 20 et 80°C.

5. Procédé suivant l'une des revendications 1 à 4 , caractérisé en ce que la gélatine de base utilisée a subi préalablement une modification chimique ou enzymatique.

6. Procédé suivant l'une quelconque des revendications 1 à 5 , caractérisé en ce que l'on ajoute à la solution de gélatine hydrolysée utilisée pour le pelliculage au moins une substance destinée à modifier les propriétés de la gélatine.

7. Procédé suivant la revendication 6, caractérisé en ce que ladite substance est choisie parmi les arômes, les colorants, les glucides, les plastifiants, les agents tensioactifs, les additifs alimentaires, les charges minérales, les principes actifs pharmaceutiques.

8. Procédé suivant l'une quelconque des revendications 1 à 7 , caractérisé en ce qu'il est mis en oeuvre dans un dispositif permettant de pelliculer, en continu ou en discontinu, par pulvérisation, aspersion ou immersion.

9. Procédé suivant la revendication 8 , caractérisé en ce que le dispositif utilisé est une turbine à dragéifier, un mélangeur granulateur sécheur, ou un granulateur pulvérisateur sur lit d'air fluidisé.

10. Procédé suivant l'une quelconque des revendications 1 à 9 , caractérisé en ce que l'on fixe les paramètres technologiques de l'opération de pelliculage de façon que chaque particule de la gélatine de base à pelliculer soit enrobée individuellement d'une fine pellicule de la gélatine hydrolysée sans entraîner de façon significative de modification du volume apparent, de la densité apparente et de la granulométrie de la gélatine de base.

11. Procédé suivant l'une quelconque des revendications 1 à 9, caractérisé en ce que l'on fixe les paramètres technologiques de l'opération de pelliculage de façon que, au cours de l'opération, les particules de la gélatine de base, après avoir été individuellement pelliculées, s'agglomèrent entre elles pour former des granulés de dimensions supérieures, avec pour conséquence une diminution de la densité apparente, une augmentation du volume apparent et une modification de la répartition granulométrique.

12. Procédé suivant l'une quelconque des revendications 1 à 11, caractérisé en ce que l'on utilise, comme gélatine de base, une gélatine de peau de porc obtenue par traitement acide et, comme gélatine hydrolysée, un hydrolysat de peaux de bovidés obtenu par traitement alcalin.

13. Procédé suivant l'une quelconque des revendications 1 à 11, caractérisé en ce que l'on utilise, comme gélatine de base, une gélatine d'osséine chaulée et, comme gélatine hydrolysée, un hydrolysat de peaux de bovidés obtenu par traitement alcalin.

14. Procédé suivant la revendication 12 ou 13, caractérisé en ce qu'il est mis en oeuvre dans un granulateur pulvérisateur sur lit d'air fluidisé.

15. Procédé selon l'une quelconque des revendications 1 à 14 pour la préparation d'une gélatine constituée de 90 à 99,9 % en poids d'une gélatine de base de toute origine et de 0,1 % à 10 % en poids d'une gélatine hydrolysée de toute origine d'une masse moléculaire moyenne en poids de 500 à 30.000.

**Claims**

**Claims for the following Contracting States : BE, CH, DE, FR, GB, IT, LI, LU, NL, SE**

1. Gelatin characterized in that it is made up of particles of basic gelatin having a Bloom strength of 0 to 350 grams (British standard) and of a viscosity of 1 to 100 mPa.s (American standard), coated with a film of hydrolyzed gelatin.

2. A gelatin according to claim 1, characterized in that it is made up of 90 to 99.9 % by weight of a basic gelatin of any origin and of 0.1 % to 10 % by weight of a hydrolyzed gelatin of any origin, having a mean molecular weight within the range of 500 to 30,000.

3. A gelatin according to claim 2, characterized in that the hydrolyzed gelatin has a mean molecular weight within the range of 5,000 to 10,000

4. A gelatin according to any one of claims 1 to 3, characterized in that the basic gelatin is a gelatin which has been subjected to chemical or enzymatic modification for converting its physical or chemical properties.

5. A gelatin according to any one of claims 1 to 4, characterized in that it contains at least one additive for modifying the properties of the gelatin.

6. A gelatin according to claim 5, characterized in that said additive is chosen from the aromas, the colorants, the glucides, the plasticizers, the surfactants, the food additives, the mineral fillers, the active pharmaceutical principles.

7. Method of preparation of a gelatin according to any one of claims 1 to 6, characterized by the agitation of a basic gelatin to be film-coated, by the dissolving of a hydrolyzed gelatin at a concentration of 0.1 to 5 % by weight in an aqueous liquid, at a temperature within the range of 20 to 80°C, by the agitation and wetting of the basic gelatin with the hydrolyzed gelatin solution by sprinkling, immersion or spray-atomization so as to ensure that the proportion of added hydrolyzed gelatin is within the range of 0.1 to 10 % by weight of dry extract with respect to the mass of basic gelatin expressed in weight of dry extract, and by the drying of the film-coated gelatin.

8. Method according to claim 7, characterized in that a basic gelatin of any origin having a Bloom strength within the range of 0 to 350 grams (British standard) and a viscosity within the range of 1 to 100 mPa.s (American standard) is employed, and in that a hydrolyzed gelatin of any origin having a mean molecular weight within the range of 500 to 30,000 is employed.

9. Method according to claim 8, characterized in that the hydrolyzed gelatin employed has a mean molecular weight within the range of 5,000 to 10,000.

10. Method according to one of claims 7 to 9, characterized in that the treatment operation and drying operation are performed at temperatures within the range of 20 to 80°C.

11. Method according to one of claims 7 to 10, characterized in that the basic gelatin employed has been subjected beforehand to a chemical or enzymatic modification.

12. Method according to any one of claims 7 to 11, characterized in that at least one substance is added to the hydrolyzed gelatin solution employed for the film-coating operation and is intended to modify the properties of the gelatin.

13. Method according to claim 12, characterized in that said substance is chosen from the aromas, the colorants, the glucides, the plasticizers, the surfactants, the food additives, the mineral fillers, the active pharmaceutical principles.

14. Method according to any one of claims 7 to 13, characterized in that it is carried out in a device allowing continous or discontinuous film-coating, by spray-atomization, sprinkling or immersion.

15. Method according to claim 14, characterized in that the device employed is a pelletizing drum, a mixer-granulator-drier, or a fluidized-air-bed spray granulator.

16. Method according to any one of claims 7 to 15, characterized in that the technological parameters of the film-forming operation are set so as to ensure that each particle of the basic gelatin to be film-coated is coated individually with a fine film-coat of the hydrolyzed gelatin without resulting in any significant modification of the apparent volume, of the apparent density and of the particle size of the basic gelatin.

17. Method according to any one of claims 7 to 15, characterized in that the technological parameters of the film-forming operation are set so as to ensure that at the time of this operation, the particles of the basic gelatin after individual film-coating thereof, agglomerate with each other in order to form granules of greater dimensions thus producing a reduction in apparent density, an increase in apparent volume and a modification of the particle-size distribution.

13

18. Method according to any one of claims 7 to 17, characterized in that a pigskin gelatin obtained by acid treatment is utilized as basic gelatin and a beefskin hydrolyzate obtained by alkali treatment is utilized as hydrolyzed gelatin.

19. Method according to any one of claims 7 to 17, characterized in that a lime-treated ossein gelatin is utilized as basic gelatin and a beefskin hydrolyzate obtained by alkali treatment is utilized as hydrolyzed gelatin.

20. Method according to claim 18 or 19, characterized in that it is carried out in a fluidized-air-bed spray granulator.

**Claims for the following Contracting State : AT**

1. Method of preparation of a gelatin made up of particles of basic gelatin having a Bloom strength of 0 to 350 grams (British standard) and of a a viscosity of 1 to 100 mPa.s (American standard), coated with a film of hydrolyzed gelatin, characterized by the agitation of a basic gelatin to be film-coated, by the dissolving of a hydrolyzed gelatin at a concentration of 0.1 to 5 % by weight in an aqueous liquid, at a temperature within the range of 20 to 80°C, by the agitation and wetting of the basic gelatin with the hydrolyzed gelatin solution by sprinkling, immersion or spray-atomization so as to ensure that the proportion of added hydrolyzed gelatin is within the range of 0.1 to 10 % by weight of dry extract with respect to the mass of basic gelatin expressed in weight of dry extract, and by the drying of the film-coated gelatin.

2. Method according to claim 1, characterized in that a basic gelatin of any origin having a Bloom strength within the range of 0 to 350 grams (British standard) and a viscosity within the range of 1 to 100 mPa.s (American standard) is employed, and in that a hydrolyzed gelatin of any origin having a mean molecular weight within the range of 500 to 30,000 is employed.

3. Method according to claim 2, characterized in that the hydrolyzed gelatin employed has a mean molecular weight within the range of 5,000 to 10,000.

4. Method according to one of claims 1 to 3, characterized in that the treatment operation and drying operation are performed at temperatures within the range of 20 to 80°C.

5. Method according to one of claims 1 to 4, characterized in that the basic gelatin employed has been subjected beforehand to a chemical or enzymatic modification.

6. Method according to any one of claims 1 to 5, characterized in that at least one substance is added to the hydrolyzed gelatin solution employed for the film-coating operation and is intended to modify the properties of the gelatin.

7. Method according to claim 8, characterized in that said substance is chosen from the aromas, the colorants, the glucides, the plasticizers, the surfactants, the food additives, the mineral fillers, the active pharmaceutical principles.

8. Method according to any one of claims 1 to 7, characterized in that it is carried out in a device allowing continous or discontinuous film-coating, by spray-atomization, sprinkling or immersion.

9. Method according to claim 8, characterized in that the device employed is a pelletizing drum, a mixer-granulator-drier, or a fluidized-air-bed spray granulator.

10. Method according to any one of claims 1 to 9, characterized in that the technological parameters of the film-forming operation are set so as to ensure that each particle of the basic gelatin to be film-coated is coated individually with a fine film-coat of the hydrolyzed gelatin without resulting in any significant modification of the apparent volume, of the apparent density and of the particle size of the basic gelatin.

11. Method according to any one of claims 1 to 9, characterized in that the technological parameters of the

14

EP 0 215 690 B1

film-forming operation are set so as to ensure that at the time of this operation, the particles of the basic gelatin after individual film-coating thereof, agglomerate with each other in order to form granules of greater dimensions thus producing a reduction in apparent density, an increase in apparent volume and a modification of the particle-size distribution.

12. Method according to any one of claims 1 to 11, characterized in that a pigskin gelatin obtained by acid treatment is utilized as basic gelatin and a beefskin hydrolyzate obtained by alkali treatment is utilized as hydrolyzed gelatin.

13. Method according to any one of claims 1 to 11, characterized in that a lime-treated ossein gelatin is utilized as basic gelatin and a beefskin hydrolyzate obtained by alkali treatment is utilized as hydrolyzed gelatin.

14. Method according to claim 12 or 13, characterized in that it is carried out in a fluidized-air-bed spray granulator.

15. Method according to any one of claims 1 to 14 for the preparation of a gelatin made up of 90 to 99.9 % by weight of a basic gelatin of any origin and of 0.1 % to 10 % by weight of a hydrolyzed gelatin of any origin, having a mean molecular weight within the range of 500 to 30,000.

**Patentansprüche**
**Patentansprüche für folgende Vertragsstaaten : BE, CH, DE, FR, GB, IT, LI, LU, NL, SE**

1. Gelatine, dadurch gekennzeichnet, daß sie aus Basisgelatineteilchen mit einer Geleekraft von 0 bis 350 g (Britische Norm) und einer Viskosität von 1 bis 100 mPa.s (amerikanische Norm), die mit einem Häutchen aus hydrolysierter Gelatine überzogen sind, besteht.

2. Gelatine nach Anspruch 1, dadurch gekennzeichnet, daß sie zu 90 bis 99,9 Gew.% aus einer Basisgelatine irgendwelchen Ursprungs und zu 0,1 bis 10 Gew.% aus einer hydrolysierten Gelatine irgendwelchen Ursprungs mit einer mittleren Molmasse in Gewicht von 500 bis 30.000 besteht.

3. Gelatine nach Anspruch 2, dadurch gekennzeichnet, daß die hydrolysierte Gelatine eine mittlere Molmasse in Gewicht zwischen 5.000 und 10.000 aufweist.

4. Gelatine nach einem der Ansprüche 1 bis 3, dadurch gekennzeichnet, daß die Basisgelatine eine Gelatine ist, die zwecks Umwandlung ihrer physikalischen oder chemischen Eigenschaften einer chemischen oder enzymatischen Veränderung unterzogen worden ist.

5. Gelatine nach einem der Ansprüche 1 bis 4, dadurch gekennzeichnet, daß sie mindestens einen Zusatz zur Veränderung der Eigenschaften der Gelatine enthält.

6. Gelatine nach Anspruch 5, dadurch gekennzeichnet, daß der Zusatz ausgewählt ist aus Aromaten, Farbstoffen, Zuckern, Weichmachern, Tensiden, Nahrungsmittelzusätzen, mineralischen Füllstoffen, pharmazeutischen Wirkstoffen.

7. Verfahren zur Herstellung einer Gelatine nach einem der Ansprüche 1 bis 6, dadurch gekennzeichnet, daß eine zu überziehende Basisgelatine gerührt wird, eine hydrolysierte Gelatine in einer Konzentration von 0,1 bis 50 Gew.% in einer wässerigen Flüssigkeit bei einer Temperatur zwischen 20 und 80˚ C in Lösung gebracht wird, die gerührte Basisgelatine mit der Lösung aus hydrolysierter Gelatine durch Besprengen, Eintauchen oder Zerstäuben benetzt wird, sodaß der Anteil an zugesetzter hydrolysierter Gelatine zwischen 0,1 und 10 Trockengew.%, bezogen auf die in Trockengewicht ausgedrückte Masse an Basisgelatine, beträgt, und die überzogene Gelatine getrocknet wird.

8. Verfahren nach Anspruch 7, dadurch gekennzeichnet, daß eine Basisgelatine irgendwelchen Ursprungs verwendet wird, die eine Geleekraft von 0 bis 350 g (britische Norm) und eine Viskosität von 1 bis 100 mPa.s (amerikanische Norm) aufweist, und daß eine hydrolysierte Gelatine irgendwelchen Ursprungs mit einer mittleren Molmasse in Gewicht von 500 bis 30.000 verwendet wird.

15

**9.** Verfahren nach Anspruch 8, dadurch gekennzeichnet, daß die verwendete hydrolysierte Gelatine eine mittlere Molmasse in Gewicht von 5.000 bis 10.000 aufweist.

**10.** Verfahren nach einem der Ansprüche 7 bis 9, dadurch gekennzeichnet, daß die Behandlung und Trocknung bei Temperaturen zwischen 20 und 80°C erfolgen.

**11.** Verfahren nach einem der Ansprüche 7 bis 10, dadurch gekennzeichnet, daß die verwendete Basisgelatine zuvor einer chemischen oder enzymatischen Veränderung unterzogen worden ist.

**12.** Verfahren nach einem der Ansprüche 7 bis 11, dadurch gekennzeichnet, daß die zum Überziehen verwendete hydrolysierte Gelatinelösung mit mindestens einer Substanz zum Verändern der Eigenschaften der Gelatine versetzt wird.

**13.** Verfahren nach Anspruch 12, dadurch gekennzeichnet, daß die Substanz ausgewählt ist aus Aromaten, Farbstoffen, Zuckern, Weichmachern, Tensiden, Nahrungsmittelzusätzen, mineralischen Füllstoffen, pharmazeutischen Wirkstoffen.

**14.** Verfahren nach einem der Ansprüche 7 bis 13, dadurch gekennzeichnet, daß es in einer Vorrichtung zum kontinuierlichen oder diskontinuierlichen Überziehen durch Zerstäuben, Besprengen oder Eintauchen durchgeführt wird.

**15.** Verfahren nach Anspruch 14, dadurch gekennzeichnet, daß die verwendete Vorrichtung eine Drageeturbine, ein Trockenmischgranulator oder ein Zerstäubergranulator über einem Luftwirbelbett ist.

**16.** Verfahren nach einem der Ansprüche 7 bis 15, dadurch gekennzeichnet, daß die technischen Parameter des Überziehvorgangs derart eingestellt werden, daß jedes zu überziehende Basisgelatineteilchen einzeln mit einem feinen Häutchen aus hydrolysierter Gelatine überzogen wird, ohne daß eine bedeutende Veränderung des Schüttvolumens, der Schüttdichte und der Korngröße der Basisgelatine bewirkt würde.

**17.** Verfahren nach einem der Ansprüche 7 bis 15, dadurch gekennzeichnet, daß die technischen Parameter des Überziehvorgangs derart eingestellt werden, daß sich die Basisgelatineteilchen während des Vorgangs, nachdem sie einzeln überzogen worden sind, zusammenballen, um Granülen größerer Abmessungen, aber infolgedessen einer geringeren Schüttdichte, eines größeren Schüttvolumens und einer veränderten Korngrößenverteilung zu bilden.

**18.** Verfahren nach einem der Ansprüche 7 bis 17, dadurch gekennzeichnet, daß als Basisgelatine eine durch saure Behandlung erhaltene Gelatine aus Schweinshaut und als hydrolysierte Gelatine ein durch alkalische Behandlung erhaltenes Rindshauthydrolysat verwendet wird.

**19.** Verfahren nach einem der Ansprüche 7 bis 17, dadurch gekennzeichnet, daß als Basisgelatine eine Gelatine aus gekalktem Knochenleim und als hydrolysierte Gelatine ein durch alkalische Behandlung erhaltenes Rindshauthydrolysat verwendet wird.

**20.** Verfahren nach Anspruch 18 oder 19, dadurch gekennzeichnet, daß es in einem Zerstäubergranulator über einem Luftwirbelbett durchgeführt wird.

**Patentansprüche für folgenden Vertragsstaat : AT**

**1.** Verfahren zur Herstellung einer Gelatine, bestehend aus Basisgelatineteilchen mit einer Geleekraft von 0 bis 350 g (Britische Norm) und einer Viskosität von 1 bis 100 mPa.s (amerikanische Norm), die mit einem Häutchen aus hydrolysierter Gelatine überzogen sind, dadurch gekennzeichnet, daß eine zu überziehende Basisgelatine gerührt wird, eine hydrolysierte Gelatine in einer Konzentration von 0,1 bis 50 Gew.% in einer wässerigen Flüssigkeit bei einer Temperatur zwischen 20 und 80°C in Lösung gebracht wird, die gerührte Basisgelatine mit der Lösung aus hydrolysierter Gelatine durch Besprengen, Eintauchen oder Zerstäuben benetzt wird, sodaß der Anteil an zugesetzter hydrolysierter Gelatine zwischen 0,1 und 10 Trockengew.%, bezogen auf die in Trockengewicht ausgedrückte Masse an Basisgelatine, beträgt, und die überzogene Gelatine getrocknet wird.

**2.** Verfahren nach Anspruch 1, dadurch gekennzeichnet, daß eine Basisgelatine irgendwelchen Ursprungs verwendet wird, die eine Geleekraft von 0 bis 350 g (britische Norm) und eine Viskosität von 1 bis 100 mPa.s (amerikanische Norm) aufweist, und daß eine hydrolysierte Gelatine irgendwelchen Ursprungs mit einer mittleren Molmasse in Gewicht von 500 bis 30.000 verwendet wird.

**3.** Verfahren nach Anspruch 2, dadurch gekennzeichnet, daß die verwendete hydrolysierte Gelatine eine mittlere Molmasse in Gewicht von 5.000 bis 10.000 aufweist.

**4.** Verfahren nach einem der Ansprüche 1 bis 3, dadurch gekennzeichnet, daß die Behandlung und Trocknung bei Temperaturen zwischen 20 und 80 $^\circ$C erfolgen.

**5.** Verfahren nach einem der Ansprüche 1 bis 4, dadurch gekennzeichnet, daß die verwendete Basisgelatine zuvor einer chemischen oder enzymatischen Veränderung unterzogen worden ist.

**6.** Verfahren nach einem der Ansprüche 1 bis 5, dadurch gekennzeichnet, daß die zum Überziehen verwendete hydrolysierte Gelatinelösung mit mindestens einer Substanz zum Verändern der Eigenschaften der Gelatine versetzt wird.

**7.** Verfahren nach Anspruch 6, dadurch gekennzeichnet, daß die Substanz ausgewählt ist aus Aromaten, Farbstoffen, Zuckern, Weichmachern, Tensiden, Nahrungsmittelzusätzen, mineralischen Füllstoffen, pharmazeutischen Wirkstoffen.

**8.** Verfahren nach einem der Ansprüche 1 bis 7, dadurch gekennzeichnet, daß es in einer Vorrichtung zum kontinuierlichen oder diskontinuierlichen Überziehen durch Zerstäuben, Besprengen oder Eintauchen durchgeführt wird.

**9.** Verfahren nach Anspruch 8, dadurch gekennzeichnet, daß die verwendete Vorrichtung eine Drageeturbine, ein Trockenmischgranulator oder ein Zerstäubergranulator über einem Luftwirbelbett ist.

**10.** Verfahren nach einem der Ansprüche 1 bis 9, dadurch gekennzeichnet, daß die technischen Parameter des Überziehvorgangs derart eingestellt werden, daß jedes zu überziehende Basisgelatineteilchen einzeln mit einem feinen Häutchen aus hydrolysierter Gelatine überzogen wird, ohne daß eine bedeutende Veränderung des Schüttvolumens, der Schüttdichte und der Korngröße der Basisgelatine bewirkt würde.

**11.** Verfahren nach einem der Ansprüche 1 bis 9, dadurch gekennzeichnet, daß die technischen Parameter des Überziehvorgangs derart eingestellt werden, daß sich die Basisgelatineteilchen während des Vorgangs, nachdem sie einzeln überzogen worden sind, zusammenballen, um Granülen größerer Abmessungen, aber infolgedessen einer geringeren Schüttdichte, eines größeren Schüttvolumens und einer veränderten Korngrößenverteilung zu bilden.

**12.** Verfahren nach einem der Ansprüche 1 bis 11, dadurch gekennzeichnet, daß als Basisgelatine eine durch saure Behandlung erhaltene Gelatine aus Schweinshaut und als hydrolysierte Gelatine ein durch alkalische Behandlung erhaltenes Rindshauthydrolysat verwendet wird.

**13.** Verfahren nach einem der Ansprüche 7 bis 11, dadurch gekennzeichnet, daß als Basisgelatine eine Gelatine aus gekalktem Knochenleim und als hydrolysierte Gelatine ein durch alkalische Behandlung erhaltenes Rindshauthydrolysat verwendet wird.

**14.** Verfahren nach Anspruch 12 oder 13, dadurch gekennzeichnet, daß es in einem Zerstäubergranulator über einem Luftwirbelbett durchgeführt wird.

**15.** Verfahren nach einem der Ansprüche 1 bis 14 zur Herstellung einer Gelatine, bestehend aus 90 bis 99,9 Gew.% einer Basisgelatine irgendwelchen Ursprungs und aus 0,1 bis 10 Gew.% einer hydrolysierten Gelatine irgendwelchen Ursprungs mit einer mittleren Molmasse in Gewicht von 500 bis 30.000.